(19) Europäisches Patentamt

European Patent Office

Office européen des brevets

(11) Publication number: **0 201 628 B1**

# EUROPEAN PATENT SPECIFICATION

(45) Date of publication of patent specification: **19.06.91**   (51) Int. Cl.⁵: **G06F 1/00**

(21) Application number: **85112787.8**

(22) Date of filing: **09.10.85**

(54) Programmable keyboard mechanism.

(30) Priority: **14.05.85 JP 100585/85**

(43) Date of publication of application:
**20.11.86 Bulletin 86/47**

(45) Publication of the grant of the patent:
**19.06.91 Bulletin 91/25**

(84) Designated Contracting States:
**DE FR IT NL SE**

(56) References cited:
**EP-A- 0 080 244**    **EP-A- 0 116 327**
**EP-A- 0 135 422**    **WO-A-84/04830**
**US-A- 4 462 076**    **US-A- 4 486 828**

**IBM TECHNICAL DISCLOSURE BULLETIN, vol. 16, no. 7, December 1973, pages 2312-2314, New York, US; G.F. NIELSEN: "Remote terminal - computer communication security system"**

**PATENTS ABSTRACTS OF JAPAN, vol. 8, no. 45 (P-257) [1482], 28th February 1984; & JP - A - 58 195 975 (CANON K.K.) 15-11-1983**

(73) Proprietor: **Cadam Systems Company, Inc**
**4-1, Hamamatsucho 2-chome**
**Minato-ku Tokyo(JP)**

(72) Inventor: **Kawamura, Masanao**
**C-301, 40, Kasamacho**
**Totsuka-ku Yokohama(JP)**

(74) Representative: **Strehl, Schübel-Hopf, Groening**
**Maximilianstrasse 54 Postfach 22 14 55**
**W-8000 München 22(DE)**

## Description

The present invention relates to a key data input apparatus for use in a computer system, as described in the preamble of attached claim 1. Such a device is known from EP-A-135 422.

In recent years, the illegal copying of computer programs has become a serious problem and it is necessary to prevent such illegal copying and to protect software by taking countermeasures. As for methods for preventing the copying of computer programs in general, there is a method where, by using a special recording method when a program is recorded on a recording medium (for example, a floppy disk), it is made impossible to read out the program stored on the recording medium by an ordinary reading method. There is also a method where, by specially designing the software program, although the program can be read out from the recording medium and copied, the operation is locked when a user tries to execute the program read out. However, whenever a new copy preventing method is adopted, a method to release this preventing means is considered corresponding to this new copy preventing method; consequently, in practice, such a problem cannot be solved by a copy preventing method which considers only the recording medium.

From the above mentioned EP-A-135 422, it is known to use an apparatus for protecting software which is connected to an output of a computer. Periodically, the computer emits a question code, whereupon the protecting apparatus emits a response code. If the computer does not receive the correct response code, the running of the program executed by the computer is automatically stopped.

However, illegal copying of a program may not be prevented completely with the known apparatus which is separately connected with the computer.

The present invention is made to solve the foregoing problem, and it is an object of the invention to provide a key data input apparatus having a copy preventing function for a program which is executed in a computer system.

According to the invention as described in the characterizing part of claim 1, attention is paid to the fact that the user executes a computer program through a key data input apparatus (for example, a keyboard) as one of the peripheral apparatus of a computer system. Conventional copy preventing methods consider mainly the recording medium. On the other hand, the invention has a feature such that a computer software is protected by a combination of a computer program and a key data input apparatus.

For example, a software maker either supplies a software program to a user, together with a read only memory (hereinafter, simply referred to as a "ROM") in which the particular information (for example, codes) relative to this program are written, or else supplies, together with the programme the dedicated keyboard in which the foregoing ROM has been installed. The user can only execute the program through the keyboard either by inserting this ROM into a proper location in the keyboard which is designated by the program, or by using the dedicated keyboard supplied. The computer main body checks via the program to see whether or not the ROM corresponding to the program is inserted into the keyboard. If the computer main body determines that the suitable ROM is not inserted into the keyboard, the computer main body rejects the communication with the keyboard; that is, the number of keyboards which can be used for the program is limited to the number of ROMs (ordinarily, one ROM) which are added to the program and are supplied. Therefore, even if the user could illegally copy the program, this copied program cannot be executed by an ordinary keyboard. In addition, the present invention is constituted such that a plurality of copy preventing ROMs, which differ depending on the kinds of the programs, can be inserted into the keyboard. In this way, even in the case where the user having the keyboard according to the invention can execute a certain program, he cannot execute the other kinds of programs copied illegally.

As described above, software can be more certainly protected by use of the key data input apparatus according to the present invention.

The above and other objects, features and advantages of the present invention will be more clear from the following description with reference to the accompanying drawings, in which:

Fig. 1 is a schematic arrangement diagram of one embodiment of a keyboard of the present invention;

Fig. 2 is a schematic flowchart showing an example of the checking operation of a computer main body to which the keyboard shown in Fig. 1 is connected; and

Fig. 3 is a perspective view showing a schematic arrangement of a computer system to which the invention is applied.

One embodiment of a key data input apparatus according to the present invention will now be described hereinbelow with reference to the drawings.

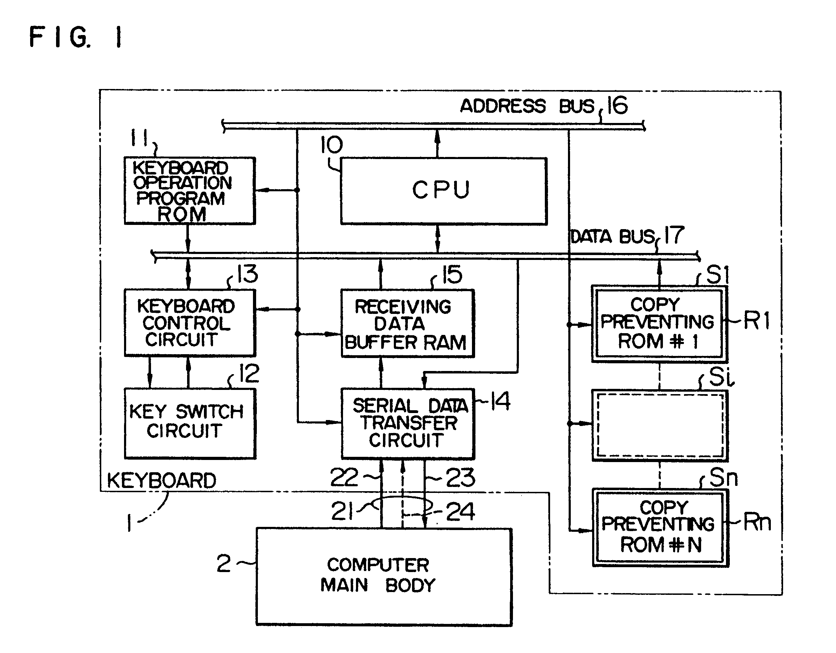

Fig. 1 is a schematic arrangement diagram of a keyboard of one embodiment of the invention. In the diagram, in a keyboard 1, there are provided: a central processing unit (hereinafter, referred to as a "CPU") 10 to control the operation of the keyboard 1; a ROM 11 to store the keyboard operation program showing the procedure of the operation of the CPU 10; a key switch circuit 12 to generate an output indicative of the position of the key pressed by the program user who operates the keyboard; a keyboard control circuit 13 to decode the key scan control and key position output of the key switch circuit 12 into the key input data; a serial data transfer circuit 14 which converts the serial data from a computer main body 2 in the computer system into parallel data and converts the parallel data from the keyboard 1 into serial data and then transmits to the computer main body 2, thereby performing a communication between the computer main body 2 and the keyboard 1; a reception data buffer RAM 15 to temporarily store the data which is transmitted from the computer main body 2 through the transfer circuit 14 and to transmit the data to the CPU 10 in timed relation to the data read from the CPU 10; and a plurality of ROM inserting sockets $S_l$, ..., $S_i$, ..., $S_n$ into which a plurality of ROMs $R_l$, ..., $R_n$ can be installed. These ROMs are the characteristic components in the invention and predetermined codes which differ in dependence on the programs which are executed by the computer system are stored in the ROMs $R_l$ to $R_n$, respectively. A reference numeral 16 denotes an address bus to transfer an address signal from the CPU 10. By properly decoding the address signal on this address bus, each component element in the keyboard is selected or an address in the memory is designated. Although not shown, various kinds of control lines are also supplied from the CPU 10 to respective component elements. A data bus 17 serves to transfer data which is outputted from the CPU 10 to each component element, and vice versa.

The operation of one embodiment of the present invention is explained with reference to Fig. 1.

In the diagram, the serial data transfer circuit 14 and the computer main body 2 are connected by a communication cable 21. In the case of this embodiment, the transmission and reception of data between the transfer circuit 14 and the computer main body 2 are performed by way of an asynchronous data communication system in which the data length is eight bits and no parity bit is used and the stop bit is 1 (hereinafter, this system is referred to as a "serial transfer system").

When the computer system is activated, accordingly, when a power supply of the keyboard 1 is turned on, the CPU 10 initializes the keyboard 1 in accordance with the program in the ROM 11. In this embodiment, the CPU 10 sets the transfer circuit 14 in such a manner that although the transfer circuit 14 can receive data from the computer main body 2, it cannot transmit data from the keyboard 1 to the computer main body 2.

Thereafter, in accordance with the state instruction data (for example, a predetermined ASCII code sequence) which is transmitted from the computer main body 2 to the keyboard 1, the CPU 10 of the keyboard 1 sets the transfer circuit 14 into either one of the following three states (a), (b) and (c) of the keyboard 1.

(a) The state in that the data from the computer main body 2 can be received and only the data in the copy preventing ROMs $R_l$ to $R_n$ in the keyboard 1 can be transmitted to the computer main body 2, but the key codes typed by means of the keys on the keyboard 1 cannot be transmitted.

(b) The state in that the data from the computer main body 2 can be received and the key codes typed by the keys on the keyboard 1 can be transmitted to the computer main body, but the data in the copy preventing ROMs $R_l$ to $R_n$ cannot be transmitted.

(c) The state in that the data from the computer main body 2 can be received similarly to the initial state, but the data from the keyboard 1 cannot be transmitted at all.

In the above-mentioned initial state, when a predetermined state instruction data (hereinafter, this data is referred to as a "first code") is transmitted from the computer main body 2 through a transmission data line 22 to the keyboard 1, the CPU 10 sets the transfer circuit 14 into the state (a). Thus, the computer main body 2 can read out the content of the copy preventing ROM in the keyboard 1 through a reception data line 23. However, in this state, the key input data from the keyboard 1 is not read out yet.

Next, when another state instructing data (hereinafter, this data is referred to as a "second code") is transmitted from the computer main body 2 to the keyboard 1, the CPU 10 transmits the contents of the ROMs inserted in the ROM inserting sockets $S_l$ to $S_n$ to the computer main body 2. In this case, the contents of all of the ROMs inserted into the sockets $S_l$ to $S_n$ may be transmitted or the content of only the ROM (for example, only the ROM $R_n$) corresponding to the program which is executed by the computer main body 2 may be transmitted. This selection in transmission of the content of the ROM can be changed in dependence on the specifications of the program.

In the computer main body 2, the content of the ROM transmitted from the keyboard 1 is checked. If the content coincides with the expected one, the computer main body 2 determines that the ROM corresponding to the program to be executed is inserted in the keyboard 1. Thus, the computer main body 2 transmits another state instruction data. The keyboard 1 is set into the state (b) in response to this another state instruction data. Due to this, the key input data from the keyboard 1 is accurately transmitted to the computer main body 2. Subsequently, the program of the computer main body 2 is continued while performing the data transfer with the keyboard 1. In this embodiment, when the keyboard 1 is set into the state (b), only the key input data is sent to the computer main body 2 but the contents of the copy preventing ROMs $R_l$ to $R_n$ cannot be read out to the computer main body 2. This is done to prevent the contents of the ROMs $R_l$ to $R_n$ from being interpreted by the user when the program operation is being normally executed.

If it is decided that the content of the copy preventing ROM from the keyboard 1 is incorrect, the computer main body 2 transmits still another state instruction data to the keyboard 1. In response to this data, the keyboard 1 is forced into the state (c). Thereafter, the program in the computer main body 2 cannot be executed.

As described above, in the case where the keyboard 1 shown in Fig. 1 is not connected to the computer main body 2, but a quite different keyboard having no copy preventing ROM attaching means is connected, the computer main body 2 can reject the execution of the program. Even if the keyboard 1 shown in Fig. 1 is connected, the computer main body 2 can obviously reject the execution of the program so long as the ROM corresponding to the program to be executed is not inserted; therefore, the software can be more securely protected.

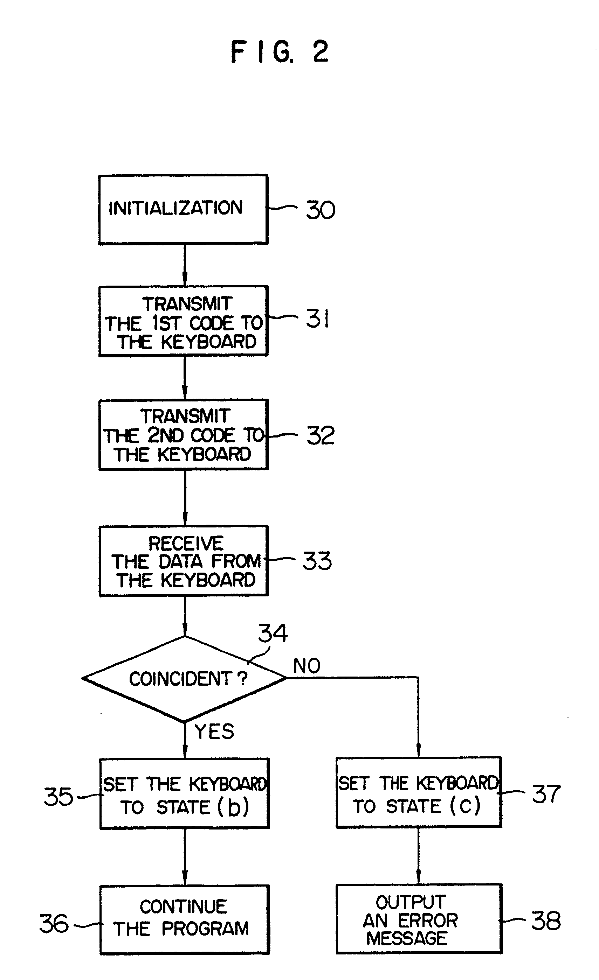

Fig. 2 shows a schematic flowchart showing an example of the above-mentioned checking operation which is executed by the computer main body 2. In the flowchart, when the computer system is activated, the system is initialized in STEP 30. In next STEP 31, the computer main body 2 sends the first code to the keyboard 1 and sets the keyboard 1 into the state (a). In this case, a special code representing that the keyboard was set into the state (a) may be transmitted from the keyboard. The transmission of this special code makes it possible to discriminate whether the keyboard is of the designated type or not at the state of STEP 31. Next, in STEP 32, the computer main body 2 sends the second code, thereby allowing the data from the keyboard 1 to be read in STEP 33. The data from the keyboard 1 is compared with the data preliminarily stored in the program in STEP 34. If they are coincident, STEP 35 follows and the state instruction data to set the keyboard 1 into the state (b) is transmitted to the keyboard 1. Thereafter, in STEP 36, the program is continued. Unless those data coincide in STEP 34, STEP 37 follows and the state instruction data to set the keyboard 1 into the state (c) is transmitted. If necessary, a message indicating that the program cannot be executed is outputted in STEP 38 and the subsequent execution of the program is stopped.

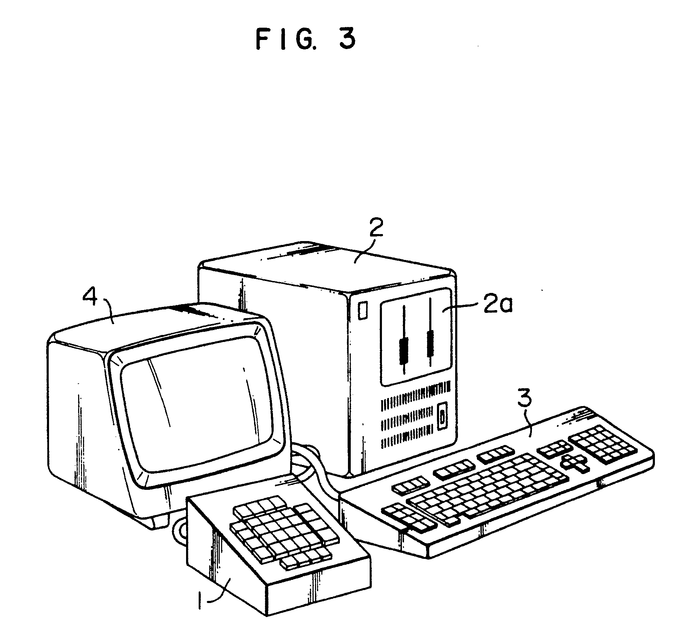

Fig. 3 shows an example of a computer system to which is applied the keyboard of the present invention, having such a software protecting function as described above.

In the diagram, a reference numeral 2 denotes the computer main body. By inserting a disk (not shown) on which a program was recorded into a disk drive 2a and turning on a power supply, the program is started. In the ordinary program, the process is performed in accordance with the key input from a keyboard 3 of the typewriter key type and the result of the process is outputted to a display 4 or a printer (not shown). The keyboard 1 is connected to the computer main body 2. Although the keyboard 1 in Fig. 3 has a special shape in correspondence to the program to be executed, it may obviously have an ordinary shape such as the keyboard 3. The program is started by inserting the disk, on which the program to designate the use of the keyboard 1 was stored, into the disk drive 2a. The computer main body 2 performs the check in the steps as shown in Fig. 2 and executes the program if the keyboard 1 is the correct one. Otherwise, the computer main body rejects the execution of the program.

Although the inhibition and permission of the communication with the computer main body 2 by the transfer circuit 14 as communicating means are controlled by way of the CPU 10 in the keyboard 1 in the foregoing embodiment, alternatively, a control line 24 may be supplied from the computer main body 2 through the communication cable 21 to the transfer circuit 14, and the inhibition and permission of the communicating operation of the transfer circuit 14 may then be controlled by the computer main body 2.

As described above, according to the present invention, the copying of a program is prevented due to a combination of the computer program and the key data input apparatus which is operated by the user, so that there is an effect such that the software can be more securely protected.

## Claims

1. A key data input apparatus for use in a computer system requiring software copy protection, comprising:

   key input means (12, 13) for generating an output code corresponding to the position of a key pressed by an operator; and

   communicating means (14, 15) for performing a communication with a computer (2) of the computer system which executes a predetermined software;

   **characterized by**

   attaching means ($S_l$, ... $S_n$) for attaching at

least one memory device in which predetermined data corresponding to said software is stored; and

control means (10, 11) located in said key data input apparatus and connected to said key input means, said communicating means and said attaching means, for allowing and inhibiting the communication between said key input means and said computer through said communicating means;

wherein, upon initialization, said control means (10, 11) sets said communicating means to stop any data at all from being sent to said computer;

whereupon said computer (2) then causes said control means (10, 11) to set said communicating means (14, 15) into a first state (a) in which data from said computer can be received and said predetermined data in said memory device can be transmitted to said computer, but data from said key input means (12, 13) cannot be transmitted to said computer; whereupon either said control means (10, 11) allows said key input means (12, 13) to transmit said output codes to said computer (2) only when said predetermined data stored in the memory device attached to said attaching means responds correctly to a question issued from said computer by said software (state (b)),

or said control means (10, 11) inhibits the transmission of said output codes from said key input means (12, 13) when said predetermined data either does not respond or responds incorrectly to said question (state (c)); whereby copy protection of said software can be achieved by that pair of said software and said key data input apparatus.

2. A key data input apparatus according to claim 1, wherein said control means (10, 11) transmits the data stored in said memory device attached to said attaching means ($S_l$, ... $S_n$) to said computer in response to a first predetermined code which is transmitted from said computer.

3. A key data input apparatus according to claim 2, wherein in response to a second predetermined code, which is generated when said computer determines, by reading out the data in said memory device, that the memory device attached to said attaching means ($S_l$, ... $S_n$) corresponds to the software to be executed, said control means (10, 11) permits said communicating means (14, 15) to transmit said output code from said key input means (12, 13) to said computer.

4. A key data input apparatus according to claim 2, wherein in response to a third predetermined code, which is generated when said computer determines, by reading out the data in said memory device, that the memory device attached to said attaching means ($S_l$, ... $S_n$) does not correspond to the software to be executed, said control means (10, 11) sets said communicating means into a state such that the data from said key input means (12, 13) cannot be transmitted to said computer.

5. A key data input apparatus according to any one of claims 1 to 4, wherein said memory device is a ROM ($R_l$, ... $R_n$) and said attaching means is at least one ROM socket ($S_l$, ... $S_n$).

6. A key data input apparatus according to any one of claims 1 to 5, wherein said control means includes a CPU (10).

7. A key data input apparatus according to any one of claims 1 to 6, wherein said communicating means (14, 15) performs the communication with said computer by way of a serial transfer system.

## Revendications

1. Appareil à touches pour introduction de données, utilisable dans un système informatique exigeant une protection contre la copie des logiciels, comprenant:

des moyens d'entrée à touches (12, 13) pour générer un code de sortie correspondant à la position d'une touche pressée par un opérateur; et

des moyens de transmission (14, 15) pour établir une communication avec un ordinateur (2) du système informatique qui exécute un logiciel prédéterminé,

caractérisé par

des moyens de connexion ($S_l$, ... $S_n$) pour connecter au moins une unité de mémoire dans laquelle sont mémorisées des données prédéterminées correspondant audit logiciel; et

des moyens de commande (10, 11) disposés dans ledit appareil à touches pour introduction de données et connectés auxdits moyens d'entrée à touches, auxdits moyens de transmission et auxdits moyens de connexion, pour permettre et interdire la communication entre lesdits moyens d'entrée à touches et ledit ordinateur par lesdits moyens de transmission;

dans lequel, lors de l'initialisation, lesdits moyens de commande (10, 11) mettent lesdits moyens de transmission dans un état où ils arrêtent complètement l'émission de toute donnée vers ledit ordinateur;

après quoi ledit ordinateur (2) fait alors en sorte que lesdits moyens de commande (10, 11) mettent lesdits moyens de transmission (14, 15) dans un premier état (a) dans lequel des données issues dudit ordinateur peuvent être reçues et lesdites données prédéterminées dans ladite unité de mémoire peuvent être transmises audit ordinateur, mais les données issues desdits moyens d'entrée à touches (12, 13) ne peuvent pas être transmises audit ordinateur;

après quoi

ou bien lesdits moyens de commande (10, 11) permettent que lesdits moyens d'entrée à touches (12, 13) transmettent lesdits codes de sortie audit ordinateur (2), uniquement lorsque lesdites données prédéterminées mémorisées dans l'unité de mémoire connectée auxdits moyens de connexion répondent correctement à une question émise à partir dudit ordinateur par ledit logiciel [état (b)].

ou bien lesdits moyens de commande (10, 11) interdisent la transmission desdits codes de sortie à partir desdits moyens d'entrée à touches (12, 13) lorsque lesdites données prédéterminées ne répondent pas ou répondent incorrectement à ladite question [état (c)],

ce qui fait qu'une protection contre la copie dudit logiciel peut être assurée par la paire constituée par ledit logiciel et ledit appareil d'introduction de données à touches.

2. Appareil d'introduction de données à touches selon la revendication 1, dans lequel lesdits moyens de commande (10, 11) transmettent audit ordinateur les données mémorisées dans ladite unité de mémoire connectée auxdits moyens de connexion ($S_l$, ... $S_n$) en réponse à un premier code prédéterminé qui est transmis à partir dudit ordinateur.

3. Appareil d'introduction de données à touches selon la revendication 2, dans lequel, en réponse à un deuxième code prédéterminé, qui est généré lorsque ledit ordinateur détermine, en lisant les données contenues dans ladite unité de mémoire, que l'unité de mémoire connectée auxdits moyens de connexion ($S_l$, ... $S_n$) correspond au logiciel à exécuter, lesdits moyens de commande (10, 11) permettent que lesdits moyens de transmission (14, 15) transmettent ledit code de sortie desdits moyens d'entrée à touches (12, 13) audit ordinateur.

4. Appareil d'introduction de données à touches selon la revendication 2, dans lequel, en réponse à un troisième code prédéterminé, qui est généré lorsque ledit ordinateur détermine, en lisant les données contenues dans ladite unité de mémoire, que l'unité de mémoire connectée auxdits moyens de connexion ($S_l$, ... $S_n$) ne correspond pas au logiciel à exécuter, lesdits moyens de commande (10, 11) mettent lesdits moyens de transmission dans un état tel que les données provenant desdits moyens d'entrée à touches ne peuvent pas être transmises audit ordinateur.

5. Appareil d'introduction de données à touches selon l'une quelconque des revendications 1 à 4, dans lequel ladite unité de mémoire est une ROM (mémoire fixe) ($R_l$, ... $R_n$) et lesdits moyens de connexion sont constitués par au moins un socle pour ROM ($S_l$, ... $S_n$).

6. Appareil de saisie de données à touches selon l'une quelconque des revendications 1 à 5, dans lequel lesdits moyens de commande comprennent une unité centrale de traitement (10).

7. Appareil de saisie de données à touches selon l'une quelconque des revendications 1 à 6, dans lequel lesdits moyens de transmission établissent la communication avec ledit ordinateur au moyen d'un système de transfert en série.

**Ansprüche**

1. Tasten-Dateneingabevorrichtung zur Verwendung in einem Computersystem, bei dem ein Software-Kopierschutz erforderlich ist, mit

einer Tasten-Eingabeeinrichtung (12, 13) zum Erzeugen eines Ausgangscodes, der der Position einer durch einen Bediener gedrückten Taste entspricht; und mit

einer Verbindungseinrichtung (14, 15) zum Herstellen einer Verbindung mit einem Computer (2) des Computersystems, das eine vorgegebene Software ausführt;

**gekennzeichnet durch**

eine Anschlußeinrichtung ($S_l$, ... $S_n$) zum Anschließen wenigstens einer Speichervorrichtung, in der vorgegebene Daten entsprechend der genannten Software gespeichert sind; und durch

eine Steuereinrichtung (10, 11), die in der Tasten-Dateneingabevorrichtung untergebracht ist und die mit der Tasten-Eingabeeinrichtung, der Verbindungseinrichtung und der Anschlußeinrichtung verbunden ist, um die Verbindung zwischen der Tasten-Eingabeeinrichtung und dem Computer über die Verbindungseinrichtung freizugeben und zu unterdrücken;

wobei auf die Initialisierung hin die Steuereinrichtung (10, 11) die Verbindungseinrichtung veranlaßt, das Absenden von Daten an den Computer insgesamt zu unterbinden;

wobei der Computer (2) dann die Steuereinrichtung (10, 11) veranlaßt, die Verbindungseinrichtung (14, 15) in einen ersten Zustand (a) zu versetzen, in dem vom Computer Daten empfangen werden können und die genannten vorgegebenen Daten in der Speichervorrichtung zu dem Computer übertragen werden können, während von der Tasten-Eingabeeinrichtung (12, 13) keine Daten zu dem Computer übertragen werden können;

wobei entweder die Steuereinrichtung (10, 11) es der Tasten-Eingabeeinrichtung (12, 13) ermöglicht, die genannten Ausgangscodes nur dann zu dem Computer (2) zu übertragen, wenn die vorgegebenen Daten, die in der an die Anschlußeinrichtung angeschlossenen Speichervorrichtung gespeichert sind, genau einer von dem Computer durch die Software gestellten Frage entsprechen (Zustand (b)),

oder die Steuereinrichtung (10, 11) die Übertragung der Ausgangscodes von der Tasten-Eingabeeinrichtung (12, 13) unterdrückt, wenn entweder die vorgegebenen Daten nicht oder nicht richtig der Frage entsprechen (Zustand (c));

wodurch ein Kopierschutz für die Software durch das Paar Software und Tasten-Dateneingabevorrichtung erhalten werden kann.

2.    Tasten-Dateneingabevorrichtung nach Anspruch 1, wobei die Steuereinrichtung (10, 11) die in der an die Anschlußeinrichtung ($S_l$, ... $S_n$) angeschlossenen Speichervorrichtung gespeicherten Daten in Reaktion auf einen ersten vorgegebenen Code überträgt, der vom Computer ausgegeben wird.

3.    Tasten-Dateneingabevorrichtung nach Anspruch 2, wobei in Reaktion auf einen zweiten vorgegebenen Code, der erzeugt wird, wenn der Computer durch Auslesen der Daten in der Speichervorrichtung feststellt, daß die an die Anschlußeinrichtung ($S_l$, ... $S_n$) angeschlossene Speichervorrichtung der auszuführenden Software entspricht, es die Steuereinrichtung (10, 11) der Verbindungseinrichtung (14, 15) erlaubt, den Ausgangscode von der Tasten-Eingabeeinrichtung (12, 13) zu dem Computer zu übertragen.

4.    Tasten-Dateneingabevorrichtung nach Anspruch 2, wobei in Reaktion auf einen dritten vorgegebenen Code, der erzeugt wird, wenn der Computer durch Auslesen der Daten in der Speichervorrichtung feststellt, daß die an die Anschlußeinrichtung ($S_l$, ... $S_n$) angeschlossene Speichervorrichtung nicht der auszuführenden Software entspricht, die Steuereinrichtung (10, 11) die Verbindungseinrichtung (14, 15) in einen solchen Zustand versetzt, daß die Daten von der Tasten-Eingabeeinrichtung (12, 13) nicht zu dem Computer übertragen werden können.

5.    Tasten-Dateneingabevorrichtung nach einem der Ansprüche 1 bis 4, wobei die Speichervorrichtung ein ROM ($R_l$, ... $R_n$) und die Anschlußeinrichtung wenigstens eine ROM-Fassung ($S_l$, ... $S_n$) ist.

6.    Tasten-Dateneingabevorrichtung nach einem der Ansprüche 1 bis 5, wobei die Steuereinrichtung eine CPU (10) enthält.

7.    Tasten-Dateneingabevorrichtung nach einem der Ansprüche 1 bis 6, wobei die Verbindungseinrichtung (14, 15) die Verbindung zu dem Computer mittels eines seriellen Übertragungssystems herstellt.

# F I G. I

# F I G. 2

```
┌─────────────────┐
│  INITIALIZATION │ ～ 30
└─────────────────┘
         │
         ▼
┌─────────────────┐
│    TRANSMIT     │ ～ 31
│ THE 1ST CODE TO │
│  THE KEYBOARD   │
└─────────────────┘
         │
         ▼
┌─────────────────┐
│    TRANSMIT     │ ～ 32
│ THE 2ND CODE TO │
│  THE KEYBOARD   │
└─────────────────┘
         │
         ▼
┌─────────────────┐
│    RECEIVE      │ ～ 33
│ THE DATA FROM   │
│  THE KEYBOARD   │
└─────────────────┘
         │
         ▼
              34
      ◇ COINCIDENT ? ◇ ── NO ──┐
              │                 │
             YES                │
              ▼                 ▼
┌─────────────────┐   ┌─────────────────┐
│ SET THE KEYBOARD│   │ SET THE KEYBOARD│
35 ～│ TO STATE (b)    │   │ TO STATE (c)    │～ 37
└─────────────────┘   └─────────────────┘
         │                     │
         ▼                     ▼
┌─────────────────┐   ┌─────────────────┐
│    CONTINUE     │   │     OUTPUT      │
36 ～│  THE PROGRAM    │   │   AN ERROR     │～ 38
└─────────────────┘   │    MESSAGE      │
                      └─────────────────┘
```

# F I G. 3